(19) Europäisches Patentamt
European Patent Office
Office européen des brevets

(11) **EP 4 625 506 A1**

(12) **EUROPEAN PATENT APPLICATION**
published in accordance with Art. 153(4) EPC

(43) Date of publication:
01.10.2025 Bulletin 2025/40

(21) Application number: 24863151.7

(22) Date of filing: 03.09.2024

(51) International Patent Classification (IPC):
$H01M\ 4/04^{(2006.01)}$    $H01M\ 4/1397^{(2010.01)}$
$H01M\ 4/58^{(2010.01)}$    $H01M\ 4/136^{(2010.01)}$
$H01M\ 10/052^{(2010.01)}$    $H01M\ 4/02^{(2006.01)}$

(52) Cooperative Patent Classification (CPC):
H01M 4/02; H01M 4/04; H01M 4/136;
H01M 4/1397; H01M 4/58; H01M 4/62;
H01M 10/04; H01M 10/052; Y02E 60/10

(86) International application number:
PCT/KR2024/013239

(87) International publication number:
WO 2025/053570 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.09.2023 KR 20230117828

(71) Applicant: LG Energy Solution, Ltd.
Seoul 07335 (KR)

(72) Inventors:
• SUNG, Jin Su
Daejeon 34122 (KR)

• AN, In Gu
Daejeon 34122 (KR)
• KIM, Hye Jin
Daejeon 34122 (KR)
• OH, Yun Pyo
Daejeon 34122 (KR)
• KIM, Min Hyun
Daejeon 34122 (KR)

(74) Representative: Plasseraud IP
104 Rue de Richelieu
CS92104
75080 Paris Cedex 02 (FR)

(54) **METHOD FOR MANUFACTURING POSITIVE ELECTRODE, POSITIVE ELECTRODE, AND LITHIUM SECONDARY BATTERY COMPRISING SAME**

(57) A manufacturing method of a positive electrode according to exemplary embodiments of the present disclosure includes a process of manufacturing a positive electrode slurry including a positive electrode active material; and a coating process of coating the positive electrode slurry on a current collector using a slot die to manufacture a preliminary positive electrode, wherein a shim embedded in the slot die used in the coating process does not comprise a protrusion part for forming a semi-coated part having a relatively thin coating thickness of the positive electrode slurry.

[FIG. 6]

EP 4 625 506 A1

**Description**

[Technical Field]

This application claims the benefit of priority from Korean Patent Application No. 10-2023-0117828, filed on September 05, 2023, the disclosures of which are incorporated herein by reference.

The present disclosure relates to a manufacturing method of a positive electrode, a positive electrode, and a lithium secondary battery including the positive electrode, and more particularly to a manufacturing method of the positive electrode for preventing detachment of a positive electrode active material layer, a positive electrode manufactured according to the manufacturing method, and a lithium secondary battery having excellent safety due to preventing NP ratio inversion.

[Background]

As technology development and demand for electric vehicles and energy storage systems (ESS) increase, the demand for batteries as an energy source is rapidly increasing, and research is being conducted on batteries that can meet various demands. In particular, lithium secondary batteries with high energy density and excellent lifespan and cycle characteristics are being actively researched as a power source of such devices.

Lithium cobalt oxide (LCO), lithium nickel cobalt manganese oxide (LNCMO), and lithium transition metal phosphate, etc. are being used as positive electrode active materials of lithium secondary batteries.

A positive electrode comprising a lithium transition metal phosphate as a positive electrode active material, compared to a positive electrode comprising a lithium cobalt oxide (LCO) or a lithium nickel cobalt manganese oxide (LNCMO) as a positive electrode active material, has lower flexibility and has a higher possibility of detachment of the positive electrode active material layer in a notching and cutting process, and the detachment of the positive electrode active material layer may cause a defect. In addition, in general, increasing the rolling density of the electrode tends to decrease the flexibility of the electrode, and thus, there has been a limitation in increasing the rolling density in the positive electrode comprising lithium transition metal phosphate as the positive electrode active material.

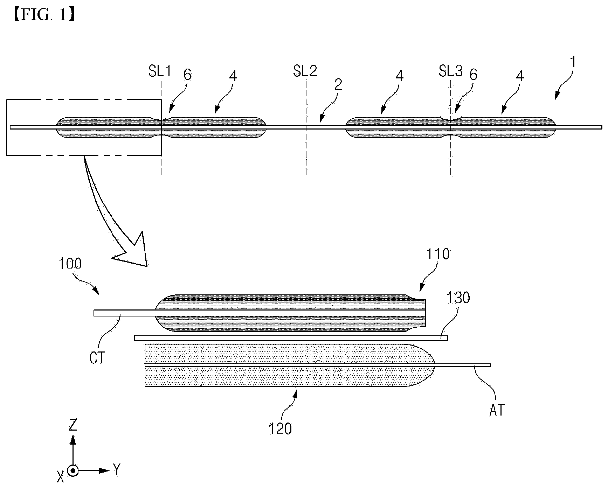

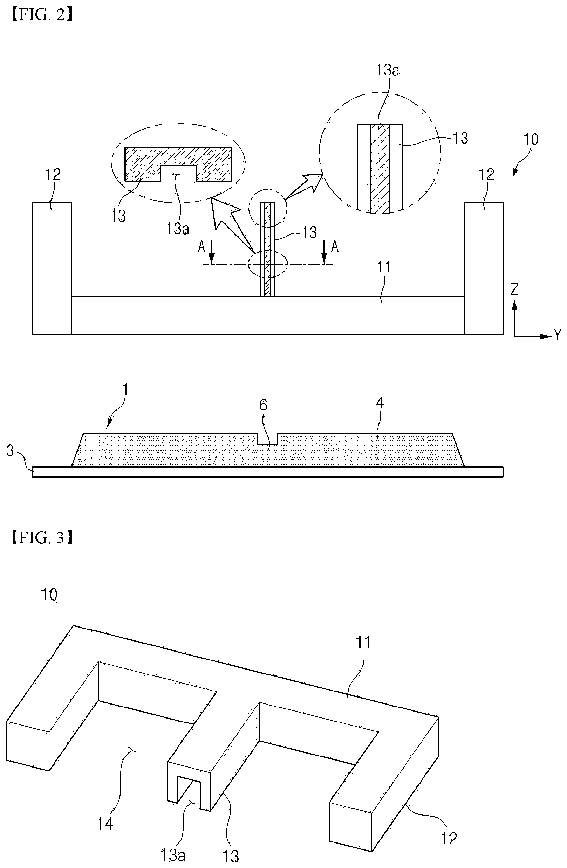

FIG. 1 is a diagram illustrating a side view (bottom) of an electrode assembly according to the conventional art and a side view (top) of a preliminary positive electrode according to the conventional art for processing the positive electrodes comprising the electrode assembly, FIG. 2 is a front view of a shim embedded in a slot die for coating a positive electrode slurry, such as the preliminary positive electrode illustrated in FIG. 1, and a side view of the preliminary positive electrode on which the positive electrode slurry is applied using the shim, and FIG. 3 is a perspective view of the shim illustrated in FIG. 2.

Referring to FIG. 1, the electrode assembly 100 may include one or two or more unit bodies with a separator 130 interposed between the positive electrode 110 and the negative electrode 120. In addition, the positive electrode tab CT and the negative electrode tab AT protrude in opposite directions from each other, such that the upper part of the positive electrode protruding from the positive electrode tab CT faces the lower part of the negative electrode, and the lower part of the negative electrode protruding from the negative electrode tab AT faces the upper part of the positive electrode. However, the length of the sliding region of the positive electrode and the length of the sliding region of the negative electrode may appear differently, and the inclined shape of the sliding region may appear variously, such as an upwardly convex shape, a downwardly convex shape, a straight shape, an S-shaped shape, and the slope may appear differently even if the inclined shape is the same. Accordingly, depending on the facing position of the positive/negative electrodes, there may be a part that locally forms an imbalance of the NP ratio, and the imbalance of the NP ratio may cause lithium to precipitate from the negative electrode and cause a safety accident such as a short circuit, etc.

In particular, the portion where the upper part of the negative electrode and the lower part of the positive electrode face each other has a greater risk of localized NP ratio inversion compared to the portion where the lower part of the negative electrode and the upper part of the positive electrode face each other, and thus, when coating the positive electrode slurry, the coating thickness of the positive electrode slurry is applied relatively thinly to the slitting part that becomes the lower part of the positive electrode.

Meanwhile, in order to improve the production rate of the electrode, there is a technology for coating the electrode slurry in a wide width and slitting the electrode along a slitting predetermined line provided in the transverse direction center of the coated part of the electrode slurry.

Referring to FIG. 1, a preliminary positive electrode 1 manufactured according to the conventional art can be divided into an uncoated part 2 in which a positive electrode active material layer is not formed, a positive electrode active material layer 4, and a semi-coated part 6. In this case, the traverse direction (Y direction) length of the positive electrode active material layer 4 may be manufactured in a wide width such that it has a length of twice or more the traverse direction length of a conventional electrode, and in such a case, the semi-coated part 6 is located in the center of the traverse direction (Y direction) of the positive electrode active material layer 4. The thickness of the semi-coated part 6 is relatively smaller than the thickness of the positive electrode active material layer 4, and thus, the positive electrode active material layer 4 and the semi-coated part 6 form a step. Then, by slitting the preliminary positive electrode along the slitting lines SL1, SL3 located on the semi-coated part 6, and when assembling the electrode assembly, the slitted portion becomes the lower part of the positive electrode, the thickness of the positive electrode active material layer of the lower part of the positive electrode facing the upper part of the negative electrode is relatively thin and assembled. Referring to the below drawing of FIG. 1, the lower part of the positive electrode 110 in the electrode assembly 100 faces the upper part of the negative electrode, and since the thickness of the lower part of the positive electrode manufactured as shown in FIG. 1 is relatively thin, the risk of NP ratio inversion can be reduced even if the upper part of the negative electrode facing the lower part of the positive electrode includes a sliding region.

Then, to form the semi-coated part 6 on the preliminary positive electrode 1 as described above, the positive electrode slurry is coated using a slot die embedded with the shim shown in FIGS. 2 and 3.

Referring to FIGS. 2 and 3, the shim 10 embedded in the slot die includes a base 11, a guide 12, and a protrusion part 13. The base 11 extends in a first direction (Y direction), which is a width direction of the die block (not shown), and the guide 12 and the protrusion part 13, respectively, are connected to the base 11 and extend in a direction perpendicular to the first direction (Z direction). A plurality of flow paths 14 through which the electrode slurry flows may be separated by the guide 12 and the protrusion part 13. The flow path 14 provided by the guide 12 is open in a direction horizontal to the plane in which the base 11 and the pair of die blocks are in contact. In other words, the flow path 14 is a structure which is only open in the direction of flow of the electrode slurry and is closed on three sides by the base and the protrusion part 13. Further, the protrusion part 13 is provided with a groove 13a in which the electrode slurry flows.

Accordingly, in the preliminary positive electrode 1, an uncoated part 2 is formed corresponding to the guide 12, a positive electrode active material layer 4 is formed corresponding to a portion from the guide 12 to the protrusion part 13, and a semi-coated part 6 is formed corresponding to the protrusion part 13. By adjusting the difference between the thickness of the shim 10 and the height of the groove 13a, the height of the semi-coated part 6 can be adjusted.

However, when the preliminary positive electrode 1 including the positive electrode active material layer 4 and the semi-coated part 6 is rolled as described above, due to the step difference between the positive electrode active material layer 4 and the semi-coated part 6, the pressing force applied by the rolling roller is more concentrated on the positive electrode active material layer 4, so that the rolling density of the relatively thin semi-coated part 6 becomes smaller than the rolling density of the positive electrode active material layer 4, and such unevenness of the rolling density further enhances the detachment of the positive electrode active material layer.

Therefore, it is necessary to develop a technology to suppress the detachment of the positive electrode active material layer when manufacturing the positive electrode.

[Summary]

[Technical Problem]

The present disclosure is directed to provide a manufacturing method of a positive electrode that suppresses detachment of a positive electrode active material layer, a positive electrode with minimal detachment of the positive electrode active material layer, and a lithium secondary battery including the same.

[Technical Solution]

According to one embodiment of the present disclosure, a manufacturing method of a positive electrode is provided. The manufacturing method of the positive electrode includes: a process of manufacturing a positive electrode slurry including a positive electrode active material; and a coating process of coating the positive electrode slurry on a current collector using a slot die to manufacture a preliminary positive electrode, wherein a shim embedded in the slot die used in the coating process does not comprise a protrusion part for forming a semi-coated part having a relatively thin coating thickness of the positive electrode slurry.

A manufacturing method of a positive electrode according to one embodiment of the present disclosure, further comprising: a process of drying and rolling the preliminary positive electrode; a process of slitting the preliminary positive electrode along one or two or more slitting predetermined lines parallel to a transfer direction (MD) of the preliminary positive electrode; and a notching and cutting process of notching a positive electrode tab and cutting to a size of a unit positive electrode in the slitted preliminary positive electrode.

In one embodiment, the slot die includes: two or more die blocks; and a shim interposed between the die blocks to form a slot.

In one embodiment, the shim includes: a base extending in a first direction that is a width direction of the die blocks; and a guide connected to the base, and extending in a direction perpendicular to the first direction.

In one embodiment, the shim does not comprise, in addition to the guide, a protrusion part extending in a direction perpendicular to the first direction.

**In** one embodiment, the positive electrode active material is a lithium transition metal phosphate as indicated by the following chemical formula 1.

[chemical formula 1]     $Li_{1+a}M1_{1-x}M2_x(PO_{y-b})D_b$

wherein M1 is one or more types of elements selected from Fe, Mn, Co, Ni, Cu, Zn, and Mg,

wherein M2 is any one selected from the group consisting of 2 to 15 groups and is one or more types of elements other than element M1,
wherein D is one or more types selected from the group consisting of F, S, and N, and
wherein $-0.5 \leq a \leq +0.5$, $0 \leq x \leq 0.8$, $3.95 \leq y \leq 4.05$, and $0 \leq b \leq 1$.

In one embodiment, the positive electrode slurry includes a positive electrode active material, a binder and a conductive material in a weight ratio of 94 to 99: 0.5 to 4:0.5 to 4.

In one embodiment, after the coating process, the thickness $T_P$ of the positive electrode active material layer measured at an arbitrary point (P) selected along the transverse direction (TD) of the preliminary positive electrode and the thickness $T_C$ of the central part of the positive electrode active material layer satisfy the following condition 1.

$$[\text{condition } 1]$$

$$0.975 \leq T_P/T_C \leq 1.025$$

However, the P is an arbitrary point selected in the flattened region except the sliding region at the end part of the preliminary positive electrode.

In one embodiment, in the slitting process, at least one or more of the slitting predetermined lines are disposed on a coated part of the positive electrode slurry.

In one embodiment, in the slitting process, a cut surface of the slitted coated part of positive electrode slurry is slitted such that it is perpendicular to a plane of the current collector.

According to another embodiment of the present disclosure, a positive electrode is provided. The positive electrode, comprising: a positive electrode main body part having a positive electrode active material layer disposed on one or both sides of the positive electrode current collector; and a positive electrode tab protruding from one side of the positive electrode main body part, wherein a rolling density $RD_B$ and a rolling density average value $RD_A$ measured at an arbitrary point (P) selected at a lower part of the positive electrode facing the positive electrode tab satisfy the following condition 2.

$$[\text{condition } 2]$$

$$0.975 \leq RD_B/RD_A \leq 1.025$$

However, the P is an arbitrary point selected in the flattened region except the sliding region at the end part of the overall length direction of the positive electrode active material layer.

In one embodiment, the positive electrode active material layer includes, as the positive electrode active material, a lithium transition metal phosphate as indicated by the chemical formula 1.

According to another embodiment of the present disclosure, a lithium secondary battery is provided. The lithium secondary battery is a lithium secondary battery having a structure in which an electrode assembly is accommodated in the interior of a pouch exterior material together with an electrolyte, wherein the electrode assembly includes a positive electrode and a negative electrode, wherein the positive electrode includes a positive electrode main body part and a positive electrode tab protruding from one side of the positive electrode main body part, and wherein a rolling density $RD_B$ and a rolling density average value $RD_A$ measured at an arbitrary point (P) selected at a lower part of the positive electrode facing the positive electrode tab satisfy the following condition 2.

$$[\text{condition } 2]$$

$$0.975 \leq RD_B/RD_A \leq 1.025$$

However, the P is an arbitrary point selected in the flattened region except the sliding region at the end part of the overall length direction of the positive electrode active material layer.

In one embodiment, the negative electrode includes a negative electrode sliding region wherein the upper part of the negative electrode facing the lower part of the positive electrode in which a thickness surface of the negative electrode active material layer is inclined with respect to the plane of the negative electrode current collector, and the overall length direction length of the negative electrode sliding region may be 3mm or less, more preferably 1mm or less.

In one embodiment, a slope of the negative electrode sliding region is 0.15 or more.

The slope means a value of b, which is a maximum thickness of the negative electrode active material layer of the negative electrode sliding region with respect to the overall length direction length a of the negative electrode sliding region.

[Advantageous Effects]

According to one embodiment of the present disclosure, the positive electrode slurry is coated using a slot die having a shim which does not provide a protrusion part for forming a semi-coated part with a relatively thin coating thickness of the positive electrode slurry. Thus, as the coating thickness of the positive electrode slurry is uniform after the coating process, the rolling density is also uniform, thereby preventing the detachment phenomenon of the positive electrode active material layer that may be caused by the unevenness of the rolling density.

The positive electrode and the lithium secondary battery according to one embodiment of the present disclosure have the advantage of excellent capacity characteristics due to minimized detachment of the positive electrode active material layer.

[Brief Description of the Drawings]

FIG. 1 is a side view (bottom) of an electrode assembly according to the conventional art and a side view (top) of a preliminary positive electrode according to the conventional art for processing the positive electrodes constituting the electrode assembly.

FIG. 2 is a front view of a shim embedded in a slot die for coating a positive electrode slurry, such as the positive electrode base substrate shown in FIG. 1, and a side view of a preliminary positive electrode on which the positive electrode slurry is coated using the shim.

FIG. 3 is a perspective view of the shim shown in FIG. 2.

FIG. 4 is a flowchart to describe a manufacturing method of a positive electrode according to exemplary embodiments of the present disclosure.

FIG. 5 is an exploded perspective view of a slot die according to exemplary embodiments of the present disclosure.

FIG. 6 is a front view of a shim according to one embodiment of the present disclosure and a side view of a preliminary positive electrode coated using a slot die embedded with the shim.

FIG. 7 is a perspective view of the shim shown in FIG. 6.

FIG. 8 is a front view and perspective view of a shim according to another embodiment of the present disclosure.

FIG. 9 is a side view of a preliminary positive electrode coated using a slot die embedded with the shim shown in FIG. 8.

FIG. 10 is a flowchart to describe a manufacturing method of a positive electrode according to exemplary embodiments of the present disclosure.

FIG. 11 is a diagram illustrating a slitting process according to exemplary embodiments of the present disclosure.

FIG. 12 is a diagram illustrating a notching and cutting process according to exemplary embodiments of the present disclosure.

FIG. 13 is a top view of a positive electrode according to an exemplary embodiment of the present disclosure.

FIG. 14 is a cross-sectional view of the positive electrode shown in FIG. 13.

FIG. 15 is an enlarged view of one side portion of a cross-sectional view of a negative electrode according to exemplary embodiments.

FIG. 16 is a diagram illustrating a manufacturing method of a negative electrode according to exemplary embodiments.

FIG. 17 is a graph depicting the results of calculating thickness ratio by location of a preliminary positive electrode manufactured according to an example.

FIG. 18 is a graph depicting the results of calculating the thickness ratio by location of a preliminary positive electrode manufactured according to a comparative example.

FIG. 19 is a photograph of a positive electrode manufactured according to an example and a comparative example.

[Description of Reference Numerals]

1,20,30: preliminary positive electrode
510: positive electrode
2,21,31: uncoated part
511: positive electrode current collector
4,22,32,512: positive electrode active material layer
515: positive electrode tab
6: semi-coated part
10: shim
11: base
12: guide
13: protrusion part
100: electrode assembly
110: positive electrode
120: negative electrode
CT: positive electrode tab
AT: negative electrode tab
200: slot die
210, 310: shim
211, 311: base
212, 312: guide
220,230: die block
231: manifold
520: negative electrode

[Detailed Description]

Hereinafter, the present disclosure will be described in detail with reference to the attached drawings.

Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

The terms used in this specification are used to describe exemplary embodiments only and are not intended to limit the present invention. Expressions in the singular include the plural unless the context clearly indicates otherwise.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In this specification, the transfer direction (MD) of the preliminary positive electrode and the overall width direction of the positive electrode are defined as the X direction, the traverse direction (TD) of the preliminary positive electrode and the overall length direction of the positive electrode are defined as the Y direction, and the direction perpendicular to the plane by the combination of the X direction and the Y direction is defined as the Z direction.

**Manufacturing method of positive electrode**

The present disclosure provides a manufacturing method of a positive electrode as a first embodiment.

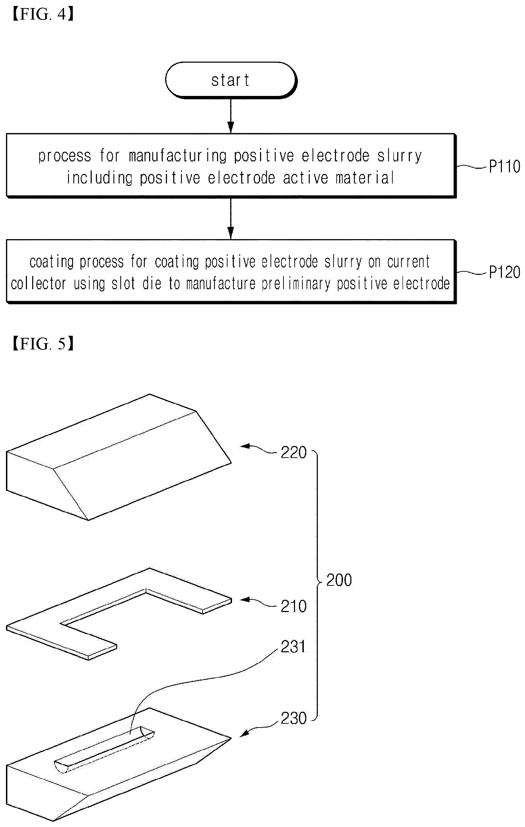

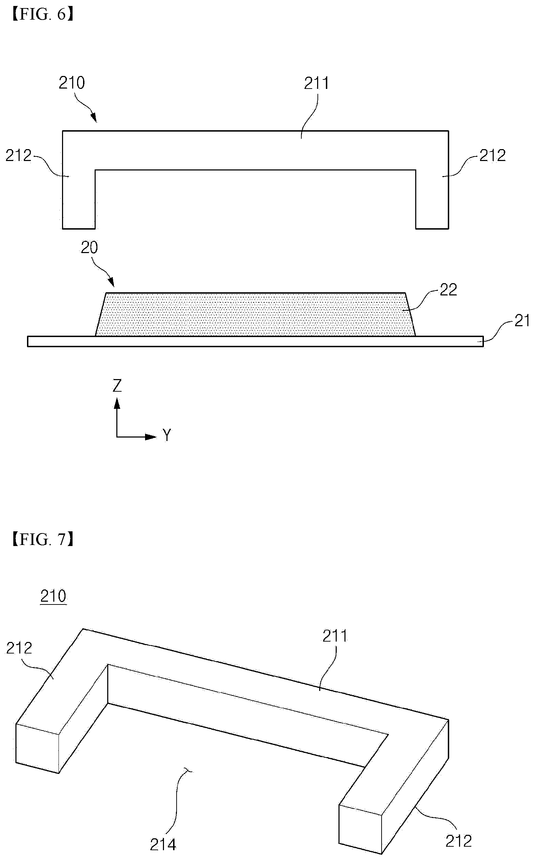

FIG. 4 is a flowchart to describe a manufacturing method of a positive electrode according to exemplary embodiments of the present disclosure, FIG. 5 is an exploded perspective view of a slot die according to exemplary embodiments of the present disclosure, FIG. 6 is a front view of a shim according to one embodiment of the present disclosure and a side view of a preliminary positive electrode coated using a slot die embedded with the shim, and FIG. 7 is a perspective view of the shim shown in FIG. 6.

Referring to FIG. 4, a manufacturing method of a positive electrode according to exemplary embodiments of the present disclosure may include a process P110 for manufacturing a positive electrode slurry; and a coating process P120 for coating the positive electrode slurry on a current collector using a slot die to manufacture a preliminary positive electrode. According to the manufacturing method of the positive electrode according to exemplary embodiments of the present disclosure, the shim embedded in the slot die does not comprise a protrusion part for forming a semi-coated part having a relatively thin coating thickness of the positive electrode slurry. Accordingly, the coating thickness of the positive electrode slurry is uniform after the coating process, thereby preventing unevenness of the rolling density due to unevenness of the coating thickness of the positive electrode slurry during the rolling process. Further, the preliminary positive electrode manufactured according to the present disclosure has a uniform rolling density along the transverse direction (TD), which can prevent detachment of the positive electrode active material layer that may be caused by unevenness of the rolling density during the subsequent slitting, notching, and cutting process. The manufacturing method of the positive electrode according to the present disclosure is particularly useful for a positive electrode including a lithium transition metal phosphate as the positive electrode active material layer, since the risk of detachment of the positive electrode active material layer is higher due to defective flexibility compared to a positive electrode including a lithium cobalt oxide (LCO) or a lithium nickel cobalt manganese oxide (LNCMO) as the positive electrode active material.

The process of manufacturing the positive electrode slurry (P110) may include mixing and stirring the positive electrode active material, binder, and conductive material in a solvent.

The solvent is preferably a solvent capable of dispersing the positive electrode active material, binder and conductive material to a certain level or more.

Specific examples of the solvent may be one or two or more types selected from the group consisting of acetone, tetrahydrofuran, acetonitrile, dimethylformamide, dimethylsulfoxide, dimethylacetamide and N-Methyl-2-Pyrrolidone (NMP). These solvents are non-aqueous solvents and are preferred in terms of stability compared to aqueous solvents.

The positive electrode active material may include a lithium transition metal phosphate as indicated by the following chemical formula 1.

$$[\text{chemical formula 1}] \qquad Li_{1+a}M1_{1-x}M2_x(PO_{y-b})D_b$$

wherein M1 is one or more types of elements selected from Fe, Mn, Co, Ni, Cu, Zn, and Mg,

wherein M2 is any one selected from the group consisting of 2 to 15 groups and is one or more types of elements other than element M1,

wherein D is one or more types selected from the group consisting of F, S, and N, and

wherein $-0.5 \leq a \leq +0.5$, $0 \leq x \leq 0.8$, $3.95 \leq y \leq 4.05$, and $0 \leq b \leq 1$.

According to one specific embodiment of the present disclosure, the lithium transition metal phosphate may be one or more types selected from the group consisting of M1 is Fe, M2 consists of Al, Mg, Co, Mn, Ti, Ga, Cu, V, Nb, Zr, Ce, In, Zn and Y. In particular, the lithium transition metal phosphate may be lithium iron phosphate ($LiFePO_4$).

The binder may be any binder polymer conventionally used in electrodes, without limitation. For example, polyvinylidene fluoride-hexafluoropropylene (PVDF-co-HFP), polyvinylidene fluoride (PVDF), polyacrylonitrile, polymethyl methacrylate (PMMA), styrene-butadiene rubber (SBR), carboxyl methyl cellulose (CMC), etc. and various types of binder polymers can be used.

Such binders, based on the solid content in the positive electrode slurry, may be included in an amount of 0.1 wt.% to 30 wt.%, more particularly 0.1 wt.% to 10 wt.%, and even more particularly 0.5 wt.% to 5 wt.%.

The conductive material is not particularly limited as long as it is an electrically conductive material that does not cause chemical changes in the electrochemical element. Specifically, the conductive material may be carbon black, graphite, carbon fiber, carbon nanotube, metal powder, conductive metal oxide, organic conductive material, and the like, and currently commercially used products as the conductive material include acetylene black group (such as products of Chevron Chemical Company or Gulf Oil Company), Ketjen Black EC group (Armak Company products), Vulcan XC-72 (Cabot Company products), and Super P (MMM Company products).

The conductive material, based on the solid content of the positive electrode slurry, may be included in an amount of 0.1 wt.% to 30 wt.%, more specifically 0.1 wt.% to 10 wt.%, more specifically 0.5 to 5 wt.%.

According to one specific embodiment of the present disclosure, the positive electrode slurry may comprise a positive electrode active material, binder and conductive material in a weight ratio of 94 to 99: 0.5 to 4: 0.5 to 4, more particularly 95 to 98.5: 1 to 4: 0.5 to 3, more particularly 95.5 to 98: 1.5 to 3.5: 1 to 3. In the solid content of the positive electrode slurry, if the weight ratio of the positive electrode active material, the binder, and the conductive material satisfies the above numerical range, a positive electrode having excellent capacity, adhesion, and electrical properties can be manufactured.

The coating process P120 is a process of coating the positive electrode slurry on the current collector to have a predetermined coating thickness.

In exemplary embodiments, the transverse direction length of the coated part of the positive slurry in the coating process P120 may have a length corresponding to twice the overall length direction length of the positive electrode to be manufactured. By coating the positive electrode slurry in such a wide width and subsequently slitting the center thereof, the productivity of manufacturing the positive electrode can be improved.

According to the present disclosure, in order to ensure that the electrode slurry has a uniform coating thickness along the traverse direction (TD, Y direction) of the preliminary positive electrode 20, the shim 210 embedded in the slot die 200 is characterized in that it does not comprise a protrusion part to form a semi-coated part in which the coating thickness of the positive electrode slurry is relatively thin.

Referring to FIGS. 5 to 7, a slot die 200 according to one embodiment may include a pair of die blocks 220,230; and a shim 210 interposed between the die blocks 220,230 to form a slot. While FIG. 5 illustrates a slot die having two die blocks, not limited thereto, the number of die blocks may be two or more. Specifically, two die blocks may be needed for coating a single electrode slurry, and three or more die blocks may be needed for coating two or more electrode slurries.

The die blocks 220,230 have the shape of prismoid that are symmetrical to each other and are assembled with one side corresponding to the underside of the prismoid facing each other. In this case, the die blocks 220,230 enclose the outer surface of the shim 210 and are preferably larger than one side of the shim. The shim 210 may be interposed between two die blocks 220,230, which may be engaged and mutually coupled by a plurality of bolt members. The pair of die blocks 220,230 are spaced apart from each other by a thickness of the shim 210, thereby forming a flow path 214 in the interior of the slot die 200.

At least one die block among the two die blocks may be provided with a manifold 231 accommodating a certain volume of positive electrode slurry, and the manifold 231 may be connected to an outside positive electrode slurry supply part (not shown). The positive electrode slurry accommodated in the manifold 231 flows in the interior of the slot die 200 along the flow path 214 and is discharged to the outside through outlets (not shown). Such outlets may be thin and elongated, and the current collector located in the lower portion of the slot die 200 may move at a constant speed so that the positive electrode slurry is widely and uniformly coated on the base substrate.

Referring to FIGS. 6 and 7, the shim 210 includes a base 211 extending in a first direction (Y direction) that is a width direction of the die blocks 220,230; and a guide 212 connected to the base 211 and extending in a direction perpendicular to the first direction (Z direction). The guide 212 may be extended in the flow direction (Z direction) of the positive electrode slurry. An uncoated part 21 may be formed corresponding to the guide 212, and a positive electrode tab may be formed on the uncoated part 21. While the above drawings illustrate a structure of a shim 210 in which a pair of guides 212 are located at the ends of both sides of the base 211, the number of guides is not limited thereto. The thickness of the pair of guides 212 is mutually the same.

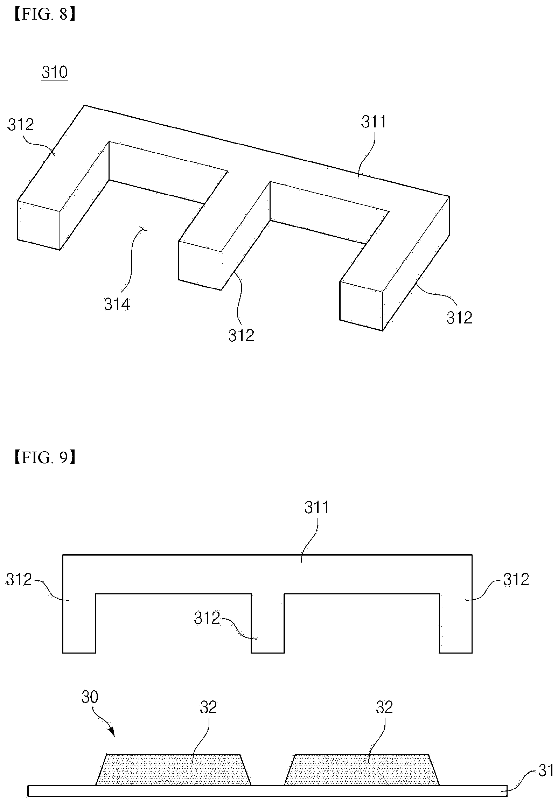

FIG. 8 is a front view and perspective view of a shim according to another embodiment of the present disclosure, and FIG. 9 is a side view of a preliminary positive electrode coated using a slot die embedded with the shim shown in FIG. 8. Referring to these drawings, the shim 310 includes a base 311; and three guides 312 connected to the base and extending in a direction perpendicular to the first direction (Y direction). Among the three guides, two guides are located at the ends of both sides of the base 311, and one guide is located in the center of the base 311. An uncoated part 31 may be formed corresponding to the three guides 312.

As described above, the shim 210,310 does not have a protrusion part extending in a direction perpendicular to the first direction (Y direction) other than the first guide 212,312. When the positive slurry is coated using the slot die embedded with such a shim 210,310, a semi-coated part having a relatively thin coating thickness of the positive slurry is not formed, and the positive electrode slurry can be uniformly coated along the traverse direction (Y direction) of the preliminary positive electrodes 20,30 as shown in FIGS. 6 and 9.

**In** one embodiment of the present disclosure, after the coating process, the thickness $T_P$ of the positive electrode active material layer measured at an arbitrary point (P) selected along the transverse direction (TD) of the preliminary positive electrode and the thickness $T_C$ of the central part of the positive electrode active material layer satisfy the following condition 1.

$$[\text{condition } 1]$$

$$0.975 \leq T_P/T_C \leq 1.025$$

However, the P is an arbitrary point selected in the flattened region except the sliding region at the end part of the overall length direction of the positive electrode active material layer.

According to the coating process P120 according to the present disclosure as described above, the coating thickness of the positive electrode slurry is uniform, and thus the rolling density of the positive electrode active material layer is also uniform in the subsequent rolling process, thereby suppressing the detachment phenomenon of the positive electrode active material layer that may be caused by deviations of the rolling density.

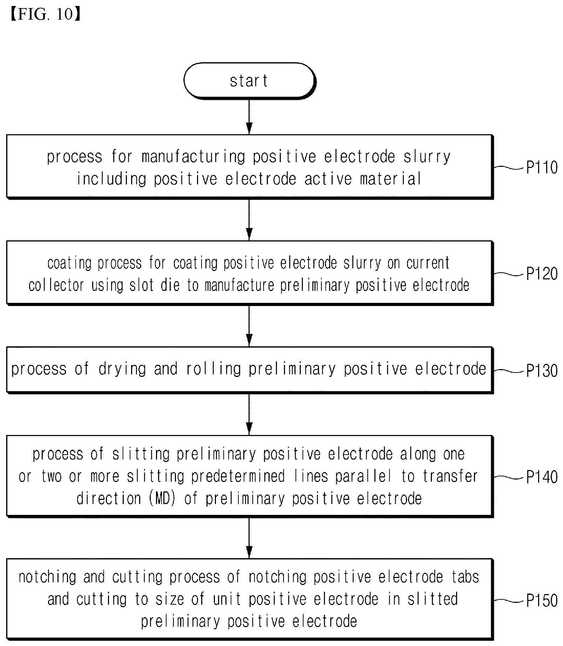

FIG. 10 is a flowchart to describe a manufacturing method of a positive electrode according to exemplary embodiments of the present disclosure. Referring to FIG. 10, a manufacturing method of a positive electrode according to one embodiment of the present disclosure comprises: a process (P130) of drying and rolling the preliminary positive electrode after the coating process (P120); a process (P140) of slitting the preliminary positive electrode along one or two or more slitting predetermined lines parallel to a transfer direction (MD) of the preliminary positive electrode; and a notching and cutting process (P150) of notching the positive electrode tabs and cutting to a size of a unit positive electrode, in the slitted preliminary positive electrode.

In one embodiment, the notching and cutting P150 from the coating process P120 may be performed as a roll-to-roll continuous process.

The drying and rolling process P130 may include a drying process for drying the positive electrode slurry coated on the preliminary positive electrode and a rolling process for compressing the dried preliminary positive electrode to a predetermined thickness. The methods of the drying and rolling processes are not particularly limited, and may be performed by methods generally known in the electrode process for secondary batteries.

In one embodiment, the drying process may be performed by transferring the preliminary positive electrode in a drying furnace equipped with: a hot air nozzle configured to spray hot air on the preliminary positive electrode and/or a heater configured to irradiate radiant heat on the preliminary positive electrode; and an interior space for transferring the preliminary positive electrode. Further, the rolling process may be performed by roll-pressing the preliminary positive electrode using a rolling roller.

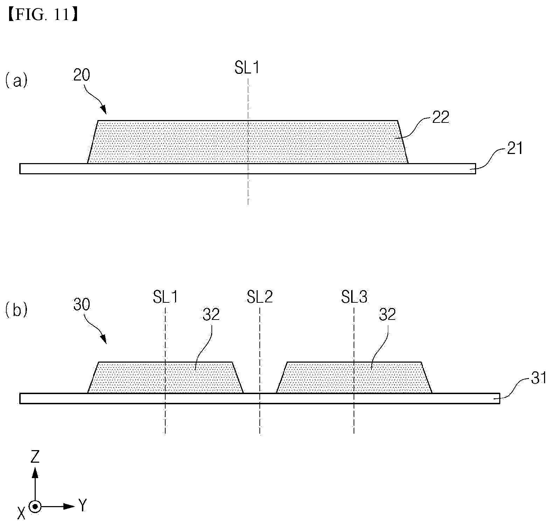

The slitting process P140 may be a process of cutting the preliminary positive electrode along a slitting predetermined line parallel to the transfer direction of the preliminary positive electrode 20. FIG. 11 is a diagram illustrating a slitting process according to exemplary embodiments of the present disclosure. Referring to FIG. 11, for one preliminary positive electrode 20,30, the slitting predetermined lines SL may be one, or may be two or more. The number of slitting predetermined lines SL may be changed depending on the number of positive electrode slurry coated parts. Specifically, if there is one positive electrode slurry coated part, there may be one slitting predetermined line SL1 as shown in (a) of FIG. 11, and if there are two positive electrode slurry coated parts, there may be three slitting predetermined lines SL1, SL2, SL3 as shown in (b) of FIG. 11. In the slitting process P140, at least one or more of the slitting predetermined lines may be disposed on the positive electrode slurry coated parts 22,32. As a non-limiting example, the slitting predetermined lines SL1,SL3 may be disposed on a central part of the traverse direction (Y direction) of the positive electrode slurry coated parts 22,32. Since the slitting predetermined lines SL1,SL3 disposed on the positive slurry coated part are parallel to the transfer direction (X direction) of the preliminary positive electrode 20, when slitting along the slitting predetermined lines, the positive slurry coated part is divided into two along the transfer direction (X direction).

In the slitting process P140, in the slitting process, the cut surface of the slitted positive electrode slurry coated part is slitted so that it is vertical to the plane of the current collector. The meaning of vertical includes not only the case in which the cut surface of the positive electrode slurry coated part and the plane of the current collector are at 90 degrees, but also the overall cases in which they are close to 90 degrees. Such a positive electrode does not include a sliding region, and thus has the advantage of having excellent capacity characteristics of the positive electrode.

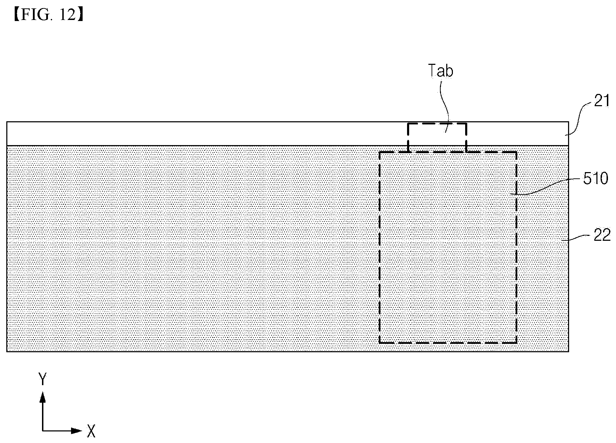

The notching and cutting process P150 may be a process of forming an electrode tab from the slitted preliminary positive electrode and cutting to the size and shape of the unit positive electrode. FIG. 12 is a diagram illustrating a notching and cutting process according to exemplary embodiments of the present disclosure. Referring to FIG. 12, an electrode tab may be formed by notching along a notching predetermined line (dotted line) formed on the uncoated part 21, and a unit positive electrode 510 may be obtained by cutting along a cutting predetermined line (dotted line) located on the positive electrode active material layer 22.

In the manufacturing method of the positive electrode according to the present disclosure, the coating thickness of the positive electrode slurry in the coating process P120 is uniform, and thus the rolling density of the positive electrode active material layer after rolling is also uniform. Therefore, when a physical external force is applied to the positive electrode active material layer by the cutter in the notching and cutting process P150, the detachment of the positive electrode active material layer that may be caused by a difference in mechanical strength can be suppressed.

## Positive electrode

The present disclosure provides a positive electrode for a lithium secondary battery as a second embodiment.

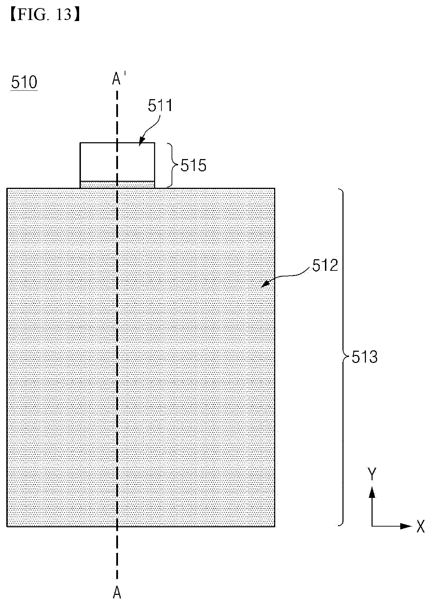

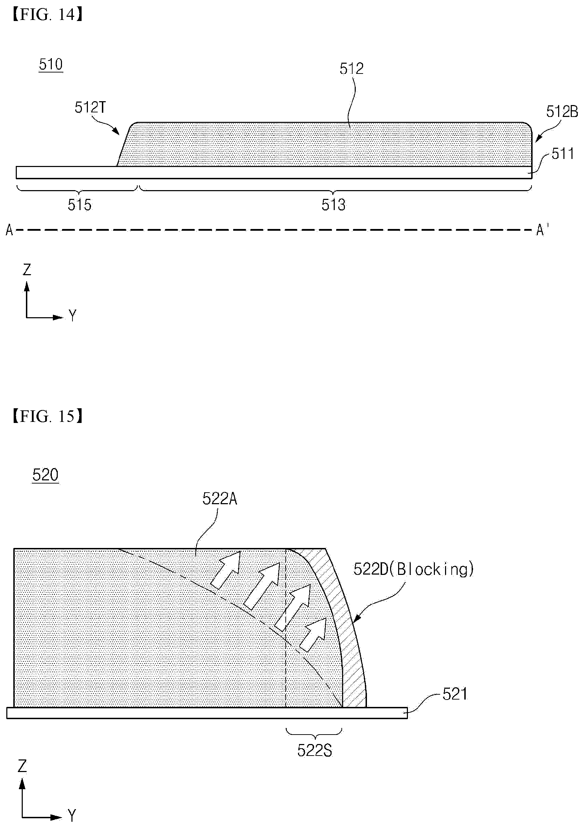

FIG. 13 is a top view of a positive electrode according to an exemplary embodiment of the present disclosure, and FIG. 14 is a cross-sectional view of the positive electrode shown in FIG. 13.

Referring to these drawings, a positive electrode 510 according to an exemplary embodiment of the present disclosure may include a positive electrode main body part 513 having a positive electrode active material layer 512 disposed on one or both sides of the positive electrode current collector 511; and a positive electrode tab 515 protruding from one side of the positive electrode main body part 513.

Referring to FIG. 14, the upper part of the positive electrode 512T, where the positive electrode tab 515 is located in the positive electrode 510, may have a thickness surface of the positive electrode active material layer 512 inclined to the plane of the positive electrode current collector 511, and the lower part of the positive electrode 512B, where the positive electrode tab 515 is located opposite to the positive electrode current collector 511 in the main body part 513, may have a thickness surface of the positive electrode active material layer perpendicular to the plane of the positive electrode current collector 511.

Referring to FIGS. 11 and 12, when the positive electrode active material layers 22,32 are cut along the slitting predetermined lines SL1, SL3, the cut surface becomes the lower part of the positive electrode 512B. Since the slitting is performed in a direction perpendicular to the plane of the current collectors 21,31, the thickness surface of the positive electrode active material layer at the lower part of the positive electrode 512B is necessarily perpendicular to the plane of the positive electrode current collector.

According to one embodiment, in the positive electrode 510, a rolling density $RD_B$ and a rolling density average value $RD_A$ measured at an arbitrary point (P) selected at a lower part of the positive electrode 512B facing the positive electrode tab 515 satisfy the following condition 2.

$$[\text{condition 2}]$$

$$0.975 \leq RD_B/RD_A \leq 1.025$$

Here, the P is an arbitrary point selected in the flattened region except the sliding region at the end part of the overall length direction of the positive electrode active material layer.

According to the conventional art, as shown in FIG. 1, the semi-coated part 6 of the preliminary positive electrode 1 has a relatively thin thickness, and thus less pressing force is applied during the rolling process. Accordingly, the rolling density of the semi-coated part 6 of the positive electrode base substrate 1 is relatively small. However, when the center of the semi-coated part 6 is slitted as shown in FIG. 1, the cut surface of the semi-coated part becomes the lower part of the positive electrode, and thus the rolling density of the lower part of the positive electrode according to the conventional art has a value of $\pm 5\%$ or more compared to the average value of the rolling density of the positive electrode.

However, since the positive electrode according to the present disclosure satisfies the above condition 2, the rolling density $RD_B$ value of the lower part of the positive electrode 512B has a uniform rolling density at a level of $\pm 2.5\%$ or less compared to the average value $RD_A$ of the rolling density, thereby providing a more excellent ability to suppress detachment of the positive electrode active material layer in the process of slitting, notching, and cutting compared to the positive electrode according to the prior art.

In one embodiment, the positive electrode active material layer 512 may include a lithium transition metal phosphate indicated by the following chemical formula 1 as the positive electrode active material, and more particularly, may include 80 wt.% or more, more particularly, 90 wt.% or more, more particularly, 95 wt.% to 100 wt.% of the lithium transition metal phosphate with respect to the total weight of the positive electrode active material.

[chemical formula 1]  $Li_{1+a}M1_{1-x}M2_x(PO_{y-b})D_b$

wherein M1 is one or more types of elements selected from Fe, Mn, Co, Ni, Cu, Zn, and Mg,

wherein M2 is any one selected from the group consisting of 2 to 15 groups and is one or more types of elements other than element M1,
wherein D is one or more types selected from the group consisting of F, S, and N, and
wherein $-0.5 \leq a \leq +0.5$, $0 \leq x \leq 0.8$, $3.95 \leq y \leq 4.05$, and $0 \leq b \leq 1$.

A positive electrode including the lithium transition metal phosphate as the positive electrode active material layer has a higher possibility of detachment of the positive electrode active material layer compared to a positive electrode including lithium cobalt oxide (LCO) or lithium nickel cobalt manganese oxide (LNCMO) as the positive electrode active material layer. Therefore, the present disclosure which uniformizes the rolling density of the positive electrode may be more useful in the case of including a lithium transition metal phosphate as the positive electrode active material in terms of the detachment rate of the positive electrode.

### Lithium secondary battery

The present disclosure provides a lithium secondary battery as a third embodiment.

A lithium secondary battery according to exemplary embodiments of the present disclosure, wherein the lithium secondary battery has a structure in which an electrode assembly is accommodated with an electrolyte in the interior of a pouch exterior material, wherein the electrode assembly includes a positive electrode and a negative electrode, wherein the positive electrode may specifically include a positive electrode according to the present disclosure.

Specifically, the positive electrode includes a positive electrode main body part and a positive electrode tab protruding from one side of the positive electrode main body part, and wherein a rolling density $RD_B$ and a rolling density average value $RD_A$ measured at an arbitrary point (P) selected at a lower part of the positive electrode facing the positive electrode tab satisfy the following condition 2.

[condition 2]

$$0.975 \leq RD_B/RD_A \leq 1.025$$

Here, the P is an arbitrary point selected in the flattened region except the sliding region at the end part of the overall length direction of the positive electrode active material layer.

Since the positive electrode according to the present disclosure satisfies the above condition 2, the rolling density is uniform along the overall length direction (Y direction) of the positive electrode, and thus the detachment of the positive electrode active material layer is minimized during slitting, notching, and cutting, the lithium secondary battery according to the present disclosure has an excellent energy density.

According to one embodiment of the present disclosure, the negative electrode includes a negative electrode sliding region wherein the upper part of the positive electrode facing the lower part of the positive electrode includes a thickness surface of the negative electrode active material layer inclined with respect to the plane of the negative electrode current collector, and the overall length direction of the negative electrode sliding region may be 3mm or less.

Conventionally, in a portion where the lower part of the positive electrode and the upper part of the negative electrode face each other, the thickness of the positive electrode active material layer at the lower part of the positive electrode is intentionally designed to be relatively thin in order to reduce the risk of NP ratio inversion.

However, in the positive electrode according to the present disclosure, the thickness of the positive electrode active material layer in the lower part of the positive electrode is the same or similar to the thickness of the positive electrode active material layer in the portion that is not the lower part of the positive electrode, and thus in order to reduce the risk of NP ratio inversion, it is necessary to design a large negative electrode capacity of the upper part of the negative electrode that faces the lower part of the positive electrode.

In particular, since the upper part of the negative electrode facing the lower part of the positive electrode comprises a negative electrode sliding region in which the thickness surface of the negative electrode active material layer is inclined with respect to the plane of the negative electrode current collector, it is preferable to minimize the overall length direction length of the negative electrode sliding region in order to design a large negative electrode capacity.

According to one embodiment of the present disclosure, the negative electrode may have an overall length direction length of the sliding region of the negative electrode in the upper part of the negative electrode of 3mm or less, preferably 2mm or less, more preferably 1mm or less, and most preferably 0.5mm or less.

The overall length direction length of the sliding region of the conventional negative electrode is in the level of 5mm to 10mm, but the negative electrode according to the present disclosure has a very short overall length direction length of the sliding region compared to the conventional negative electrode.

The manufacturing method of the negative electrode is not particularly limited.

FIG. 15 is an enlarged view of one side portion of a cross-sectional view of a negative electrode according to exemplary embodiments. In one embodiment, the negative electrode 520 may manufacture a composition for dam coating, and apply the composition for dam coating 522D to the edge portions on both sides of the traverse direction (TD, Y direction) of the negative electrode slurry coated part 522A, thereby a negative electrode having a shortened length can be manufactured such that the length of the negative electrode sliding region (522S) is at the above level. The composition for dam coating 522D plays the role of a dam at the edge portions on both sides of the transverse direction (TD) of the coated part of negative electrode slurry, suppressing the negative electrode slurry from flowing down in the transverse direction, and thus the overall length direction length of the sliding region can be controlled to be short.

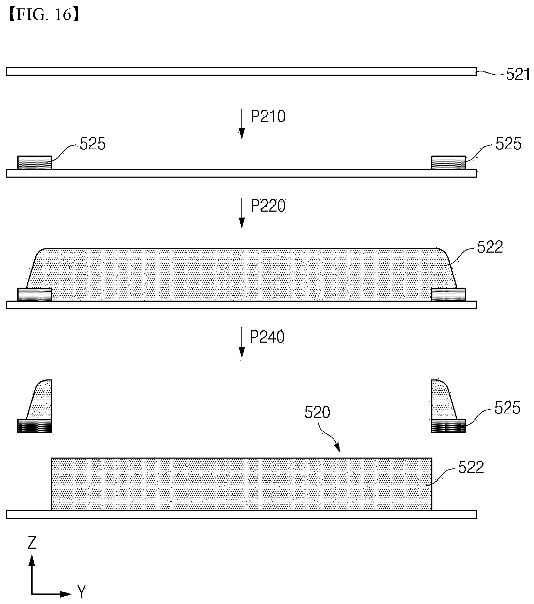

FIG. 16 is a diagram illustrating a manufacturing method of a negative electrode according to exemplary embodiments. Referring to FIG. 16, a manufacturing method of a negative electrode according to one embodiment of the present disclosure may include a step P210 of attaching an adhesive tape 525 to a current collector 521; a coating step P220 of coating a negative electrode slurry 522 on a portion planned for a coated part; a drying step P230; a step P240 of peeling off and removing the adhesive tape 525 from the current collector; and a rolling step P250.

According to a negative electrode manufacturing method according to exemplary embodiments of the present disclosure, an adhesive tape is attached on an edge of a portion planned for a coated part to which a negative electrode slurry is coated, and with the adhesive tape attached to the current collector, the adhesive tape is peeled off after coating and drying the negative electrode slurry. When peeling off the adhesive tape, the negative electrode active material layer formed on the adhesive tape is removed together, such that a cross-section of the negative electrode active material layer from which the adhesive tape is peeled forms an angle vertical to the plane of the current collector, and thus the length of the sliding region of the negative electrode active material layer is greatly reduced.

In one embodiment, the adhesive tape may be characterized in that its adhesion is reduced by going through the drying step P230. **In** such a case, the adhesive tape may be in a state in which the adhesion is reduced in the drying step, and may be peelable after drying, thereby enabling easy removal of the adhesive tape, and there is no need to perform a separate cutting process for removing the adhesive tape.

In another example, the adhesive tape may be a pressure-sensitive adhesive tape. The pressure-sensitive adhesive tape may have a somewhat lower adhesion, thereby minimizing the detachment of the electrode active material by the peeling force of the adhesive tape during the step of peeling off and removing the adhesive tape. The adhesion of the adhesive tape may be specifically 20 gf/inch or less, preferably 15 gf/inch or less, more preferably 10 gf/inch or less.

The negative electrode may be manufactured by coating and drying a negative electrode slurry including a negative electrode active material on a negative electrode current collector. The negative electrode slurry may be prepared by mixing and stirring together a negative electrode active material, a binder, and a conductive material in a solvent, and may optionally further include additives such as fillers, etc.

The negative electrode current collector is a metal having a high conductivity and to which the negative electrode slurry can be easily bonded, and any non-reactive in the voltage range of the battery can be used, and in particular, copper, stainless steel, aluminum, nickel, titanium, calcined carbon; stainless steel surface treated with carbon, nickel, titanium, or silver; aluminum-cadmium alloy; non-conductive polymer surface treated with a conductive material; or conductive polymer. In addition, fine irregularities may be formed on the surface to enhance the coupling force of the negative electrode active material, and may be used in various forms, such as films, sheets, foils, nets, porous bodies, foams, nonwoven bodies, and the like.

As the negative electrode active material, compounds capable of reversible intercalation and de-intercalation of lithium may be used. Specific examples include carbonaceous materials such as artificial graphite, natural graphite, graphitized carbon fiber, amorphous carbon, etc.; metallic compounds capable of alloying with lithium such as Si, Al, Sn, Pb, Zn, Bi, In, Mg, Ga, Cd, Si alloys, Sn alloys, or Al alloys; a metal oxide capable of doping and de-doping lithium, such as $SiO_x(0 < x < 2)$, $SnO_2$, vanadium oxide, lithium vanadium oxide; or a composite including any one of the above metallic compounds and a carbonaceous material, such as a Si-C composite or a Sn-C composite, and any one or a mixture of two or more of the aforementioned may be used. A metallic lithium thin film may also be used as the negative electrode active material.

The negative electrode active material may be included in a range of approximately 80 wt.% to 99.5 wt.%, or in a range of 88 wt.% to 99 wt.%, based on the overall weight of the negative electrode active material layer, but the content is not limited thereto.

The binder is not particularly limited as long as it is a component that aids in the coupling of the negative electrode active material to the conductive material or the like and to the current collector, for example, polyvinylidene fluoride, polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, fluorinated rubber, various copolymers, and the like.

The binder may typically be included in an amount of from 1 wt.% to 30 wt.% based on the overall weight of the negative electrode active material layer.

The conductive material is not particularly limited, as long as it is conductive without causing chemical changes in the battery, for example, graphite, such as natural graphite or artificial graphite; carbon black, such as carbon black, acetylene black, ketjen black, channel black, furnace black, lamp black, thermal black, and the like; conductive fibers, such as carbon fibers or metal fibers; conductive tubes, such as carbon nanotubes; metal powders, such as fluorocarbon, aluminum, nickel powders; conductive whiskers, such as zinc oxide, potassium titanate; conductive metal oxides, such as titanium oxide; conductive materials, such as polyphenylene derivatives; and the like.

The conductive material may typically be included in an amount of 1 wt.% to 30 wt.% based on the overall weight of the negative electrode active material layer.

The filler is optionally used as a component to suppress the expansion of the electrode, and is not particularly limited as long as it is a fibrous material without causing chemical changes in the battery, and for example, olefin-based polymers such as polyethylene, polypropylene, and the like; fibrous materials such as glass fiber, carbon fiber, and the like may be used.

According to one embodiment of the present disclosure, the slope of the negative electrode sliding region may be 0.15 or more. Here, the slope means a value of b, which is the maximum thickness of the negative electrode active material layer of the negative electrode sliding region with respect to the overall length direction length a of the negative electrode sliding region. The slope of the negative electrode sliding region being 0.15 or more is very large compared to the slope of the conventional negative electrode sliding region, and the risk of the NR ratio inversion can be reduced as the slope of the negative electrode sliding region has the above range.

The lithium secondary battery of the present disclosure can be manufactured according to conventional methods known in the art. For example, it can be manufactured by placing a separator between a positive electrode and a negative electrode and injecting an electrolyte.

The separator can be any porous base substrate conventionally used as a separator in a lithium secondary battery, and for example, a polyolefin-based porous membrane or nonwoven fabric can be used, but is not particularly limited thereto. In particular, it is preferable to have low resistance to ion movement of the electrolyte and excellent electrolyte impregnation ability.

Examples of the above polyolefin-based porous membranes include membranes formed from polyethylene such as high-density polyethylene, linear low-density polyethylene, low-density polyethylene, and ultra-high molecular weight polyethylene, polyolefin-based polymers such as polypropylene, polybutylene, and polypentene, etc. either alone or mixed polymers thereof.

In addition to polyolefin-based nonwoven fabrics, the nonwoven fabrics include, for example, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, and the like, either alone or as a mixture thereof. The structure of the nonwoven fabric may be a spunbonded nonwoven fabric or a melt-blown nonwoven fabric composed of long fibers.

The thickness of the porous base substrate is not particularly limited, but may be 5 $\mu$m to 50 $\mu$m, and the pore size and porosity present in the porous base substrate are also not particularly limited, but may be 0.01 $\mu$m to 50 $\mu$m and 10% to 95%, respectively.

Meanwhile, in order to improve the mechanical strength of the separator composed of the porous base substrate and to suppress the short circuit between the positive electrode and the negative electrode, at least one side of the porous base substrate may further include a porous coating layer including inorganic particles and a binder polymer.

Meanwhile, in the lithium secondary battery, the electrolyte may include an organic solvent and a lithium salt conventionally used in electrolytes, but is not particularly limited thereto.

As the organic solvent, any organic solvent that can serve as a medium in which ions involved in the electrochemical reaction of the battery can move may be used without particular limitation. Specifically, as the organic solvent, an ester-based solvent such as methyl acetate, ethyl acetate, $\gamma$-butyrolactone, $\varepsilon$-caprolactone, and the like; ether-based solvents, such as dibutyl ether or tetrahydrofuran; and ketone-based solvents, such as cyclohexanone; aromatic hydrocarbon-based solvents, such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC), etc. may be used.

Among them, a carbonate-based solvent is preferred, and a mixture of a cyclic carbonate (e.g., ethylene carbonate or propylene carbonate, etc.) having a high ionic conductivity and high permittivity that can increase the charge and discharge performance of the battery and a linear carbonate-based compound (e.g., ethylmethylcarbonate, dimethylcarbonate, or diethylcarbonate, etc.) having a low viscosity is more preferred.

The lithium salt may be used without particular limitation as long as it is a compound capable of providing lithium ions for use in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$, etc. may be used. The lithium salt is preferably included in the electrolyte at a concentration of approximately 0.6 mol% to 2 mol%.

In addition to the above electrolyte components, for the purpose of improving the lifespan characteristics of the battery, inhibiting the decrease in battery capacity, improving the discharge capacity of the battery, etc, the electrolyte may also contain one or more types of additives, for example, pyridine, triethylphosphite, triethanolamine, cyclic ether, ethylenediamine, n-glyme, hexanoic acid triamide, nitrobenzene derivatives, sulfur, quinone imine dyes, N-substituted oxazolidinones, N,N-substituted imidazolidines, ethylene glycol dialkyl ethers, ammonium salts, pyrroles, 2-methoxyethanol, or aluminum trichloride, and the like. In this case, the additives may be included in an amount of 0.1 wt.% to 5 wt.% based on the total weight of the electrolyte.

The lithium secondary battery of the present disclosure may be manufactured by disposing a separator between a positive electrode and a negative electrode to form an electrode assembly, placing it in the pouch-type exterior material, and then injecting an electrolyte. Alternatively, it may be manufactured by stacking the electrode assembly, impregnating it with an electrolyte, and sealing the resulting product in a battery case.

The lithium secondary battery according to the present disclosure has excellent discharge capacity, output characteristics, and safety, and is therefore useful in portable devices such as cell phones, notebook computers, digital cameras, and the like, and in the fields of energy storage systems (ESS) and electric vehicles such as hybrid electric vehicles (HEV), and the like.

The present disclosure will be described in more detail through the following examples. However, these examples are provided to illustrate the present disclosure and should not be construed as limiting the scope of the present disclosure.

**Example**

$LiFePO_4$ having an average particle diameter ($D_{50}$) of 1.0 $\mu$m and primary particles of a single body structure as a lithium transition metal phosphate, carbon nanotube (CNT) as a conductive material, and polyvinylidene fluoride (PVdF) having a weight average molecular weight (Mw) of 630,000 g/mol as a fluorine-based binder were added to N-methylpyrrolidone (NMP) solvent. A positive electrode slurry was prepared by mixing at 2500 rpm for 90 minutes using a homo-disperse.

In the positive electrode slurry, the lithium transition metal phosphate, conductive material, and fluorine-based binder were present in a weight ratio of 96.5: 1.0:2.5, and the solid content of the positive electrode slurry was 62 wt.%.

The positive electrode slurry was coated on a $20\mu$m thick aluminum thin film to be 600mg/25cm$^2$. In this case, the positive electrode slurry was coated using a slot die with an embedded shim as shown in FIG. 6.

The preliminary positive electrode coated with the positive electrode slurry was dried and rolled, and as shown in FIG. 11(a), slitting was performed along a slitting predetermined line SL1 extended in the transfer direction of the preliminary positive electrode at the center of the transverse direction (TD) of the positive electrode slurry coated part. The manufacture of the positive electrode was completed by notching an electrode tab and cutting to unit electrode size as shown in FIG. 12 for the slitted preliminary positive electrode.

**Comparative example**

In the coating process of the positive electrode slurry, the positive electrode slurry was coated using the slot die with embedded shim shown in FIG. 3, and in the slitting process, as shown in FIG. 1, the positive electrode was manufactured in the same method as the example, except that the preliminary positive electrode was slit along the slitting predetermined line in the center of the semi-coated part.

**Experimental example 1: Measuring thickness ratio of positive electrode**

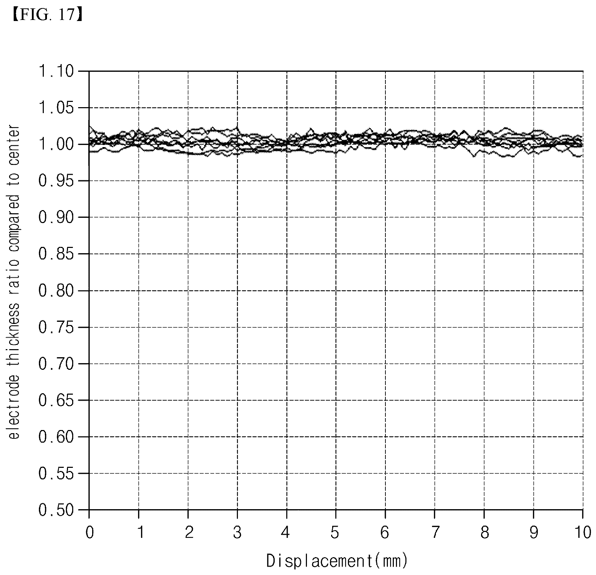

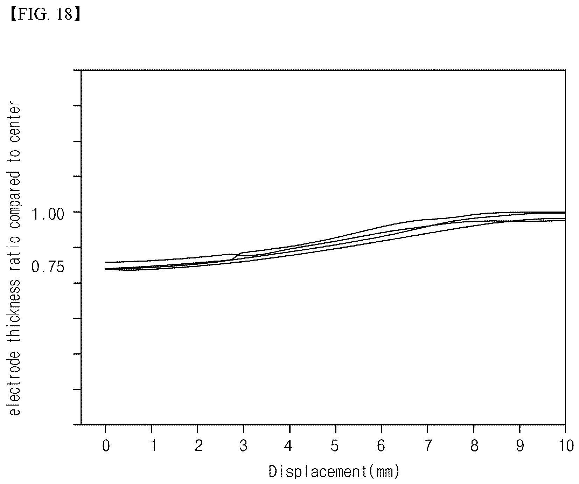

In each of the preliminary positive electrodes of the example and comparative example, a thickness $T_P$ of the positive electrode active material layer measured at a plurality of points along a transverse direction (TD), and a thickness $T_C$ of a central part of the positive electrode active material layer were measured, and a thickness ratio, which is a ratio value of the $T_P$ value to the $T_C$ value, was calculated, and the results are shown in FIG. 17 (example) and FIG. 18 (comparative example), respectively.

Referring to these drawings, it can be observed that the preliminary positive electrode according to the example has a uniform thickness of the positive electrode active material layer with a thickness ratio value of 1 regardless of the position. On the other hand, the preliminary positive electrode according to the comparative example has a thickness ratio of 0.8 to 1 depending on the position, and it can be predicted that a deviation of the rolling density will occur when rolling due to the thickness deviation of the positive electrode active material layer.

**Experimental example 2: Observation of positive electrode detachment**

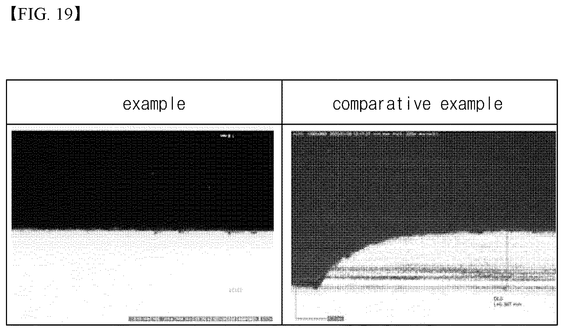

In the positive electrodes of the example and comparative example, whether detachment of the positive electrode active material layer occurred was visually observed, and a photograph thereof is shown in FIG. 19. Referring to FIG. 19, in the positive electrode of the example, there was no detachment of the positive electrode active material layer during the notching and cutting process due to the uniformity of the rolling density. On the other hand, in the positive electrode of the comparative example, due to the unevenness of the rolling density, it can be seen that the positive electrode active material layer was detached in the part where the rolling density was relatively low.

As described above, it is expected that the positive electrode manufactured according to an embodiment of the present disclosure has minimized detachment of the positive electrode active material layer during the notching and cutting process, and thus has a more excellent capacity compared to the conventional positive electrode.

**Claims**

1. A manufacturing method of a positive electrode, comprising:

   a process of manufacturing a positive electrode slurry comprising a positive electrode active material; and
   a coating process of coating the positive electrode slurry on a current collector using a slot die to manufacture a preliminary positive electrode,
   wherein a shim embedded in the slot die used in the coating process does not comprise a protrusion part for forming a semi-coated part having a relatively thin coating thickness of the positive electrode slurry.

2. The manufacturing method of the positive electrode of claim 1, further comprising:

a process of drying and rolling the preliminary positive electrode;

a process of slitting the preliminary positive electrode along one or two or more slitting predetermined lines parallel to a transfer direction (MD) of the preliminary positive electrode; and

a notching and cutting process of notching a positive electrode tab and cutting to a size of a unit positive electrode in the slitted preliminary positive electrode.

3. The manufacturing method of the positive electrode of claim 1, wherein the slot die comprises:

two or more die blocks; and

a shim interposed between the die blocks to form a slot.

4. The manufacturing method of the positive electrode of claim 3, wherein the shim comprises:

a base extending in a first direction that is a width direction of the die blocks; and

a guide connected to the base, and extending in a direction perpendicular to the first direction.

5. The manufacturing method of the positive electrode of claim 4, wherein the shim does not comprise, in addition to the guide, a protrusion part extending in a direction perpendicular to the first direction.

6. The manufacturing method of the positive electrode of claim 1, wherein the positive electrode active material is a lithium transition metal phosphate as indicated by the following chemical formula 1.

[chemical formula 1]  $Li_{1+a}M1_{1-x}M2_x(PO_{y-b})D_b$

wherein M1 is one or more types of elements selected from Fe, Mn, Co, Ni, Cu, Zn, and Mg,

wherein M2 is any one selected from the group consisting of 2 to 15 groups and is one or more types of elements other than element M1,

wherein D is one or more types selected from the group consisting of F, S, and N, and

wherein $-0.5 \leq a \leq +0.5$, $0 \leq x \leq 0.8$, $3.95 \leq y \leq 4.05$, and $0 \leq b \leq 1$.

7. The manufacturing method of the positive electrode of claim 1, wherein the positive electrode slurry comprises the positive electrode active material, a binder and a conductive material in a weight ratio of 94 to 99: 0.5 to 4:0.5 to 4.

8. The manufacturing method of the positive electrode of claim 1, wherein after the coating process,

the thickness $T_P$ of the positive electrode active material layer measured at an arbitrary point (P) selected along the transverse direction (TD) of the preliminary positive electrode and the thickness $T_C$ of the central part of the positive electrode active material layer satisfy the following condition 1.

[condition 1]

$$0.975 \leq T_P/T_C \leq 1.025$$

wherein, the P is an arbitrary point selected in the flattened region except the sliding region at the end part of the preliminary positive electrode.

9. The manufacturing method of the positive electrode of claim 2, wherein in the slitting process, at least one or more of the slitting predetermined lines are disposed on a coated part of the positive electrode slurry.

10. The manufacturing method of the positive electrode of claim 2, wherein in the slitting process, a cut surface of the slitted coated part of the positive electrode slurry is slitted such that it is perpendicular to a plane of the current collector.

11. A positive electrode, comprising:

a positive electrode main body part having a positive electrode active material layer disposed on one or both sides of the positive electrode current collector; and

a positive electrode tab protruding from one side of the positive electrode main body part,

wherein a rolling density $RD_B$ and a rolling density average value $RD_A$ measured at an arbitrary point (P) selected at a lower part of the positive electrode facing the positive electrode tab satisfy the following condition 2.

[condition 2]

$$0.975 \leq RD_B/RD_A \leq 1.025$$

wherein, the P is an arbitrary point selected in the flattened region except the sliding region at the end part of the overall length direction of the positive electrode active material layer.

12. The positive electrode of claim 11, wherein the positive electrode active material layer comprises, as the positive electrode active material, a lithium transition metal phosphate as indicated by the chemical formula 1.

[chemical formula 1]          $Li_{1+a}M1_{1-x}M2_x(PO_{y-b})D_b$

wherein M1 is one or more types of elements selected from Fe, Mn, Co, Ni, Cu, Zn, and Mg,

wherein M2 is any one selected from the group consisting of 2 to 15 groups and is one or more types of elements other than element M1,

wherein D is one or more types selected from the group consisting of F, S, and N, and

wherein $-0.5 \leq a \leq +0.5$, $0 \leq x \leq 0.8$, $3.95 \leq y \leq 4.05$, and $0 \leq b \leq 1$.

13. A lithium secondary battery having a structure in which an electrode assembly is accommodated in the interior of a pouch exterior material together with an electrolyte,

wherein the electrode assembly comprises a positive electrode and a negative electrode,

wherein the positive electrode comprises a positive electrode main body part and a positive electrode tab protruding from one side of the positive electrode main body part, and

wherein a rolling density $RD_B$ and a rolling density average value $RD_A$ measured at an arbitrary point (P) selected at a lower part of the positive electrode facing the positive electrode tab satisfy the following condition 2.

[condition 2]

$$0.975 \leq RD_B/RD_A \leq 1.025$$

wherein, the P is an arbitrary point selected in the flattened region except the sliding region at the end part of the overall length direction of the positive electrode active material layer.

14. The lithium secondary battery of claim 13, wherein the negative electrode comprises a negative electrode sliding region wherein the upper part of the negative electrode facing the lower part of the positive electrode in which a thickness surface of the negative electrode active material layer is inclined with respect to the plane of the negative electrode current collector,

wherein the overall length direction length of the negative electrode sliding region is 3mm or less.

15. The lithium secondary battery of claim 13, wherein the overall length direction length of the negative electrode sliding region is 1mm or less.

16. The lithium secondary battery of claim 13, wherein a slope of the negative electrode sliding region is 0.15 or more.

wherein the slope means a value of b, which is a maximum thickness of the negative electrode active material layer of the negative electrode sliding region with respect to the overall length direction length a of the negative electrode sliding region.

【FIG. 1】

【FIG. 2】

【FIG. 3】

【FIG. 4】

```
           start
             |
             v
  process for manufacturing positive electrode slurry
       including positive electrode active material        —P110
             |
             v
  coating process for coating positive electrode slurry on current
  collector using slot die to manufacture preliminary positive electrode  —P120
```

【FIG. 5】

【FIG. 6】

【FIG. 7】

【FIG. 8】

310

312    311

314

312

312

【FIG. 9】

311

312    312    312

30    32    32

31

【FIG. 10】

```
                            ┌──────────────┐
                            │    start     │
                            └──────┬───────┘
                                   │
                                   ▼
        ┌──────────────────────────────────────────────────┐
        │  process for manufacturing positive electrode     │     P110
        │  slurry including positive electrode active       │───
        │  material                                         │
        └──────────────────────┬───────────────────────────┘
                               │
                               ▼
        ┌──────────────────────────────────────────────────┐
        │  coating process for coating positive electrode   │     P120
        │  slurry on current collector using slot die to    │───
        │  manufacture preliminary positive electrode       │
        └──────────────────────┬───────────────────────────┘
                               │
                               ▼
        ┌──────────────────────────────────────────────────┐
        │  process of drying and rolling preliminary        │     P130
        │  positive electrode                               │───
        └──────────────────────┬───────────────────────────┘
                               │
                               ▼
        ┌──────────────────────────────────────────────────┐
        │  process of slitting preliminary positive         │     P140
        │  electrode along one or two or more slitting      │───
        │  predetermined lines parallel to transfer         │
        │  direction (MD) of preliminary positive electrode │
        └──────────────────────┬───────────────────────────┘
                               │
                               ▼
        ┌──────────────────────────────────────────────────┐
        │  notching and cutting process of notching         │     P150
        │  positive electrode tabs and cutting to size of   │───
        │  unit positive electrode in slitted preliminary   │
        │  positive electrode                               │
        └──────────────────────────────────────────────────┘
```

【FIG. 11】

(a)

(b)

【FIG. 12】

【FIG. 13】

【FIG. 14】

510

512

512T

512

512B

511

515

513

A — — — — — — — — — — — — — — — — — — — — — — — — A'

Z

Y

【FIG. 15】

520

522A

522D(Blocking)

521

522S

Z

Y

【FIG. 16】

【FIG. 17】

【FIG. 18】

【FIG. 19】

| example | comparative example |
|---|---|

## INTERNATIONAL SEARCH REPORT

| International application No. |
|---|
| **PCT/KR2024/013239** |

### A. CLASSIFICATION OF SUBJECT MATTER

**H01M 4/04**(2006.01)i; **H01M 4/1397**(2010.01)i; **H01M 4/58**(2010.01)i; **H01M 4/136**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/04(2006.01); B05C 11/10(2006.01); B05C 5/02(2006.01); H01M 10/42(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 슬러리(slurry), 코팅(coating), 슬롯 다이(slot-die), 심(shim), 리튬이차전지(lithium secondary battery)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0038888 A (LG CHEM, LTD.) 17 April 2018 (2018-04-17)<br>See claims 1 and 8-11, and paragraphs [0028], [0044] and [0045]. | 1-7,9,10 |
| A | | 8,11-16 |
| Y | KR 10-2023-0108603 A (LG ENERGY SOLUTION, LTD.) 18 July 2023 (2023-07-18)<br>See claims 1, 5 and 9-11, paragraphs [0044]-[0046], and figure 2. | 1-7,9,10 |
| A | KR 10-2023-0086608 A (LG ENERGY SOLUTION, LTD.) 15 June 2023 (2023-06-15)<br>See claim 1. | 1-16 |
| A | KR 10-2021-0155879 A (LG ENERGY SOLUTION, LTD.) 24 December 2021 (2021-12-24)<br>See claims 1 and 2. | 1-16 |
| A | KR 10-2019-0096114 A (LG CHEM, LTD.) 19 August 2019 (2019-08-19)<br>See claims 1 and 2. | 1-16 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 December 2024** | **16 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| KR | 10-2018-0038888 | A | 17 April 2018 | CN | 108604669 | A | 28 September 2018 |
| | | | | CN | 108604669 | B | 04 May 2021 |
| | | | | EP | 3404745 | A1 | 21 November 2018 |
| | | | | EP | 3404745 | B1 | 30 September 2020 |
| | | | | KR | 10-2162773 | B1 | 07 October 2020 |
| | | | | US | 11329272 | B2 | 10 May 2022 |
| | | | | US | 2020-0203712 | A1 | 25 June 2020 |
| | | | | WO | 2018-066806 | A1 | 12 April 2018 |
| KR | 10-2023-0108603 | A | 18 July 2023 | CN | 116783005 | A | 19 September 2023 |
| | | | | EP | 4289518 | A1 | 13 December 2023 |
| | | | | JP | 2024-506147 | A | 09 February 2024 |
| | | | | US | 2024-0058834 | A1 | 22 February 2024 |
| | | | | WO | 2023-136567 | A1 | 20 July 2023 |
| KR | 10-2023-0086608 | A | 15 June 2023 | CN | 116783004 | A | 19 September 2023 |
| | | | | EP | 4272878 | A1 | 08 November 2023 |
| | | | | JP | 2024-505951 | A | 08 February 2024 |
| | | | | US | 2024-0116072 | A1 | 11 April 2024 |
| | | | | WO | 2023-106798 | A1 | 15 June 2023 |
| KR | 10-2021-0155879 | A | 24 December 2021 | None | | | |
| KR | 10-2019-0096114 | A | 19 August 2019 | KR | 10-2314629 | B1 | 20 October 2021 |

Form PCT/ISA/210 (patent family annex) (July 2022)

**REFERENCES CITED IN THE DESCRIPTION**

**Patent documents cited in the description**

- KR 1020230117828